# EUROPÄISCHE PATENTSCHRIFT

(11) **EP 0 305 655 B1**
(45) Veröffentlichungstag und Bekanntmachung des Hinweises auf die Patenterteilung: **17.02.1993**
(21) Anmeldenummer: 88108597.1
(22) Anmeldetag: 30.05.1988
(51) Int. Cl.: B60R 21/32, B60K 28/14

(54) **Auslösevorrichtung für Sicherheitssystem**
Triggering device for a safety system
Dispositif de déclenchement pour système de sécurité

(30) Priorität: 31.08.1987 DE 3729021
(43) Veröffentlichungstag der Anmeldung: 08.03.1989
(73) Patentinhaber: Deutsche Aerospace AG, 81663 München (DE)
(72) Erfinder: Hora, Peter, D-8899 Edelshausen (DE); Laucht, Horst, Dr., D-8206 Bruckmühl (DE); Spies, Hans, D-8068 Pfaffenhofen (DE); Wöhrl, Alfons, D-8898 Schrobenhausen (DE)

(56) Entgegenhaltungen:
- EP-A- 0 064 888
- DE-A- 1 945 621
- DE-A- 2 207 831
- US-A- 3 703 300

## Beschreibung

Die Erfindung bezieht sich auf eine Auslösevorrichtung für Sicherheitssysteme in Form einer Rückhalteeinrichtung in Kraftfahrzeugen, die mit einem Auslösesensor für die Aktivierung dieser Sicherheitssysteme ausgerüstet ist.

Solche Auslösevorrichtungen sind in den verschiedensten Ausführungsformen und Systemen - auch von der Anmelderin - bekannt geworden. So offenbart beispielsweise die DE-A-22 07 831 eine Auslösevorrichtung für Luftkissen etc., die sich aus einer Betriebsspannungsquelle, einem Beschleunigungsfühler, einer Auswertschaltung für dessen Ausgangssignal und ein Schwellwertglied aufweist, das erst ab einem bestimmten Wert signaldurchlässig ist. Der schaltungstechnische Aufwand, die zahlreichen notwendigen Referenzspannungen usw. erfordern eine Reihe von Hilfsschaltungen etc., so daß solche Vorrichtungen doch als sehr aufwendig anzusprechen sind.

Aus der US-A-3 703 300 ist eine Auslösevorrichtung gemäß dem Oberbegriff des Anspruchs 1 bekannt.

Die Anmelderin hat - noch nicht vorveröffentlichte - Aufprallsensoren vorgeschlagen, die gegenüber dem Stand der Technik nicht nur eine erhöhte Zuverlässigkeit gegen Nichtauslösung bringen, sondern auch eine erhebliche Minderung des bisherigen Schaltungsaufwandes gewährleisten. Im einen Fall werden durch Ausbildung von zwei Auslösepfaden keine mechanisch bewegten Teile mehr benötigt und auch die diversen Hilfsschaltungen entfallen, im anderen Fall werden Schallsensoren, die mit Körperschallsensoren kombiniert sind vorgeschlagen, die ebenfalls eine vereinfachende Verbesserung für die genannten Auslösesensoren erbringen.

Der vorliegenden Erfindung liegt die Aufgabe zugrunde, eine Auslösevorrichtung der eingangs genannten Art zu schaffen, die in einfacher Weise die Verformung beim Aufprall auswertet und zur Auslösung der Sicherheitssysteme aber auch zu regelnden Eingriffen in das Fahrzeugsystem umsetzt.

Diese Aufgabe wird durch die im Anspruch 1 aufgezeigten Maßnahmen gelöst. Ausgestaltungen und Weiterbildungen gehen aus den Maßnahmen der Unteransprüche hervor und die näheren Erläuterungen werden in der nachfolgenden Beschreibung eines Ausführungsbeispiels sowie in den Figuren der Zeichnung gegeben. Es zeigen:
- Fig. 1: einen Querschnitt in schematischer Darstellung durch eine Kraftfahrzeugtür mit eingebauten Elektroden,
- Fig. 2: ein Blockschaltbild in schematischer Darstellung der Auslösevorrichtung mit Verformungssensor als steuerndes Element.

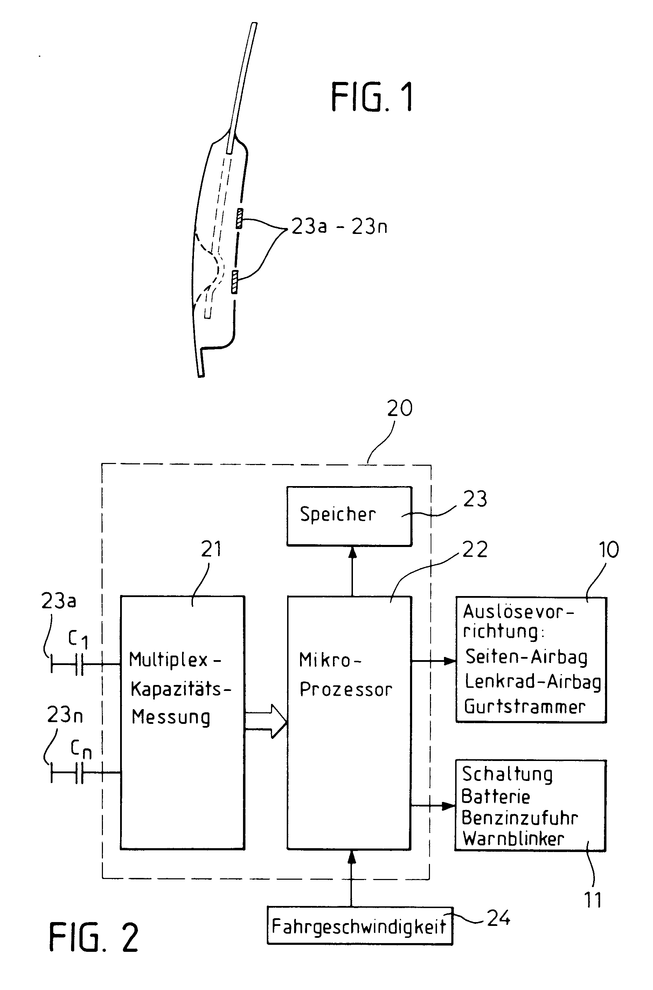

Wie in Fig. 1 an einem Ausführungsbeispiel schematisch dargestellt ist, werden an einem Kraftfahrzeug an der Innenseite der Türen, am Karosserierahmen, an den Seitenholmen, an den Kotflügeln, an den Stoßstangen usw. Elektroden 23a - 23n angeordnet, die dazu bestimmt sind, die Kapazitätsänderung an den vom Aufprall betroffenen Teilen zu detektieren und die aufgenommenen Verformungsgeschwindigkeits-Signale einer Sensorelektronik 20 zuzuführen, die daraus das Auslösesignal für die Rückhalteeinrichtung 10 der Sicherheitseinrichtungen des Fahrzeugs, wie Seiten-Airbag, Lenkrad-Airbag, Gurtstrammer usw. bildet.

Die den Elektroden 23a - 23n zugeordnete Sensorelektronik 20 wird von einem Multiplex-Kapazitätsmesser 21, einem Mikroprozessor 22 und einem Speicher 23 gebildet. Der Multiplexer 21 nimmt die Elektrodensignale auf, führt daraufhin deren Messung durch und gibt die Werte dem Mikroprozessor 21 ein. Dieser nimmt weiterhin die Werte des Fahrgeschwindigkeitsmessers 24 auf und errechnet aus allen eingegebenen Werten die Auslösesignale sowohl für die Auslösevorrichtung der Sicherheitseinrichtungen, als auch für die Schaltelektronik 11 zur entsprechenden automatischen Einflußnahme auf Getriebeumschaltung, Treibstoffzufuhrregelung, Warnblinkleuchten-Einschaltung usw.

Der Mikroprozessor 22 wertet also die detektierte Kapazitätsänderung im Hinblick auf Verformungsgeschwindigkeit, Volumen, Ort und Änderungsablauf in der Zeit bzw. Reihenfolge aus. Ihm ist nun noch ein Speicher 23 zugeordnet, der die Reihenfolge der durch die Kollision verursachten Stöße bzw. Verformungen am Kraftfahrzeug sammelt, so daß der gesamte Kollisionsvorgang exakt reproduzierbar ist.

## Patentansprüche

1. Auslösevorrichtung für Sicherheitssysteme in Form einer Rückhalteeinrichtung (10) in Kraftfahrzeugen, die mit einem Auslösesensor für die Aktivierung dieses Sicherheitssystems ausgerüstet ist, wobei der Rückhalteeinrichtung (10) eine Sensorelektronik (20) zur Detektierung und Auswertung der Verformungsgeschwindigkeit zugeordnet ist, und an besonderen Stellen des Kraftfahrzeugs Elektroden (23a - 23n) angeordnet sind, die Kapazitätsänderungen an diesen Stellen detektieren und als Signale an die Sensorelektronik (20) weitergeben, **dadurch gekennzeichnet,** daß sich die Sensorelektronik (20) aus einer Multiplex-Kapazitäts-Meßanordnung (21), einem Mikroprozessor (22) und einem Speicher (23) zusammensetzt, welcher die Reihenfolge der Stöße bzw. der Verformungen im Kraftfahrzeug sammelt.

2. Auslösevorrichtung nach Anspruch 1, **dadurch gekennzeichnet,** daß der Mikroprozessor (22) mit einem Fahrgeschwindigkeitsmesser (24) verbunden ist.

3. Auslösevorrichtung nach Anspruch 1 und 2, **dadurch gekennzeichnet,** daß der Mikroprozessor (22) seine Signale einmal dem Auslösesensor zur wahlweisen oder kombinierten Aktivierung von Seiten-Airbag-Einrichtungen, Gurtstrammern und Lenkrad-Airbag etc. zuführt und gleichzeitig einer Schaltelektronik (11) zur entsprechenden Einflußnahme auf Getriebeschaltung, Treibstoffzufuhrregelung, Warnblinkleuchten-Einschaltung usw. eingibt.

## Claims

1. Triggering device far safety systems in the form of a detention device (10) in motor vehicles, which are equipped with a triggering sensor to activate this safety system, wherein the detention device (10) is associated with a sensor electronics (20) for detection and evaluation of deformation speed, and with electrodes (23a - 23n), arranged at specified locations of a motor vehicle, which detect capacitative changes at these locations and pass them on as signals to a sensor electronica (20), **characterised in that** the sensor electronics (20) is composed of a multiplex-capacity measuring arrangement (21), a microprocessor (22) and a memory (23) which stores the sequence of impacts or deformations in the motor vehicle.

2. Triggering device according to claim 1, **characterised in that** the microprocessor (22) is connected to a speedometer (24).

3. Triggering device according to claim 1 and 2, **characterised in that** the microprocessor (22) delivers its signals to a triggering sensor for selective or combined activation of side-airbag devices, belt tighteners and steering-wheel airbag etc., and at the same time to a switch electronics (11) for respectively influencing the selection of gears, control of fuel-supply, switching an hazard lights etc.

## Revendications

1. Dispositif de déclenchement de systèmes de sécurité se présentant sous la forme d'un dispositif de retenue (10) dans des véhicules automobiles, dispositif qui est pourvu d'un détecteur de déclenchement pour l'activation dudit système de sécurité, un système électronique de détection (20) pour la détection et l'exploitation de la vitesse de déformation étant associé au dispositif de retenue (10) et des électrodes (23a - 23n) étant implantées en différents points du véhicule, lesquelles électrodes détectent les variations de capacité en ces points et les transmettent sous forme de signaux au système électronique de détection (20), caractérisé par le fait que le système électronique de détection (20) est constitué par un système de mesure de capacité (21) multiplexeur, un microprocesseur (22) et une mémoire (23) qui enregistre les chocs et déformations successifs à l'intérieur du véhicule.

2. Dispositif selon la revendication 1, caractérisé par le fait que le microprocesseur (22) est connecté à un dispositif (24) de mesure de la vitesse.

3. Dispositif selon les revendications 1 et 2, caractérisé par le fait que le microprocesseur (22) délivre ses signaux d'une part en direction du détecteur de déclenchement afin d'activer sélectivement ou en combinaison des sacs gonflables latéraux, des tendeurs de ceinture de sécurité et un sac gonflable de volant, etc... et simultanément en direction d'une électronique de commutation (11) qui agit en conséquence sur la commande de boîte de vitesse, la régulation de l'alimentation en combustible, le déclenchement des feux de détresse, etc.
